# EUROPEAN PATENT APPLICATION

(11) **EP 1 310 923 A2**
(43) Date of publication of application: **14.05.2003**
(21) Application number: 02020421.0
(22) Date of filing: 11.09.2002
(51) Int. Cl.: G07F 7/10

(54) **Public key infrastructure (PKI) based system, method, device and program**

(30) Priority: 17.09.2001 JP 2001282090
(71) Applicant: Kabushiki Kaisha Toshiba, Tokyo (JP)
(72) Inventor: Asanoma, Toshiyuki, Minato-ku, Tokyo 105-8001 (JP); Fukushima, Shigeyuki, Minato-ku, Tokyo 105-8001 (JP); Ishihara, Tatsuya, Minato-ku, Tokyo 105-8001 (JP); Kitaori, Shoji, Minato-ku, Tokyo 105-8001 (JP)
(74) Representative: HOFFMANN - EITLE

(57) **Abstract**

According to an embodiment of the present invention, an issue system (23) previously issues a smart card (30x), and sends an encrypted private key (Sk [PRk]) and a public key certificate (Ct) to a user terminal (42), when issuing a new card or updating an old card. A user terminal (42) inputs the received encrypted private key and public key certificate into a smart card (30x). A smart card (30x) stores a public key certificate (Ct), and decrypts the inputted encrypted private key (Sk [PRk]) by an encryptor/decryptor (32) based on a symmetric key (Sk), and stores the obtained private key (PRk). Therefore, collection and redistribution of a smart card becomes unnecessary, when updating a private key and a public key certificate, saving the time and labor.

## Description

The present invention relates to a public key infrastructure (PKI) based system, method, device and program used in various systems.

With the recent progress in smart card and portable electronic apparatus, it has been examined to apply public key infrastructure (PKI) to various systems requiring identification of a person and authority by personal identification number (PIN) or a digital signature.

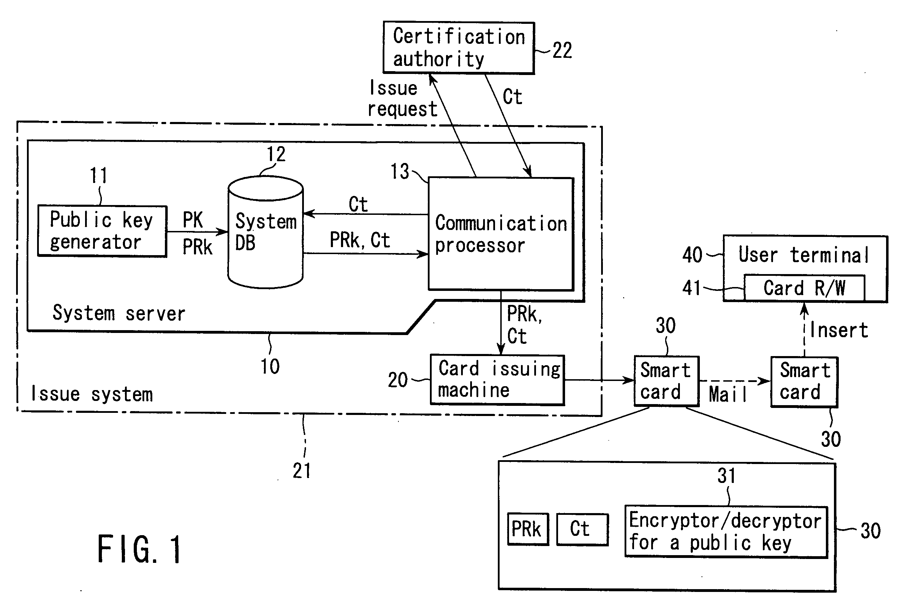

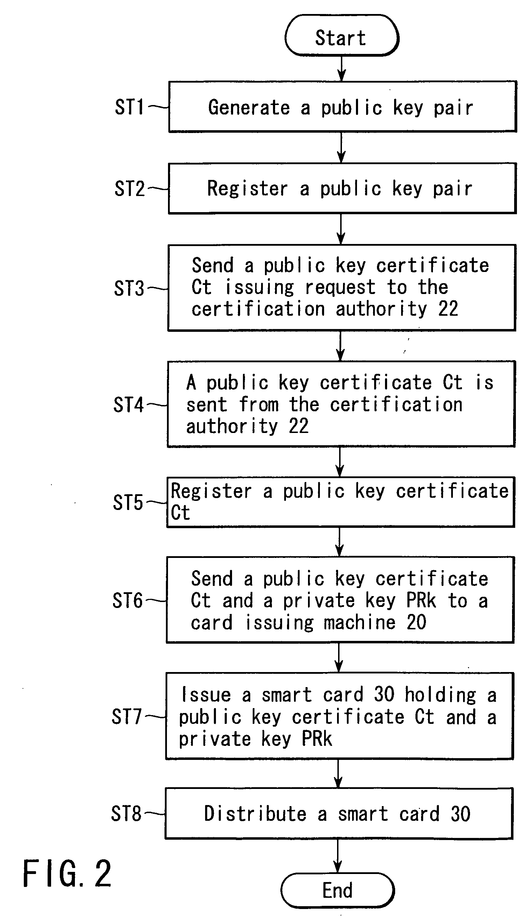

FIG. 1 is a block diagram showing the structure of a card issuing system (a public key infrastructure (PKI) based system including this system) when PKI is applied to a smart card system. FIG. 2 is a flowchart showing the operations of the card issuing system of FIG. 1. The card issuing system comprises an issue system 21 including a system server 10 and a card issuing machine 20, a certification authority (CA) 22 connected to the issue system 21 through a network, and a user terminal 40 to permit use of a smart card (a portable device) 30 issued by the issue system 21.

In an issue system, when issuing a new private key (PRk) and public key certificate (Ct), a public key generator 11 in a system server 10 generates a key pair as a pair of a public key (Pk) and a private key (PRk) for each user ID (ST 1), and registers the issued key pair for each user ID in a system DB 12 (ST2). Next, a communication processor 13 in the system server 10 sends a certification authority 22 a request for issuing a public key certificate Ct, attached by the data for generating the certificate, which includes the user ID and the public key Pk stored in the system DB 12 (ST3).

Receiving this request, the certification authority 22 issues a public key certificate Ct by giving a digital signature on the received data and the authority's own identifier, and sends this public key certificate Ct back to the system server 10 (ST 4).

In the system server 10, the communication processor 13 registers the received public key certificate Ct in the system DB 12 (ST5), and delivers the public key certificate Ct and private key PRk from the system DB 12 to the card issuing machine 20 (ST 6).

The card issuing machine 20 writes this public key certificate Ct and private key PRk into a smart card 30, and issues the smart card 30 corresponding to the ID (ST7). This smart card 30 has memory to hold the public key certificate Ct and private key PRk, and has an encryptor/decryptor 31 using the key pair. The smart card 30 is sent to the user by mail or the like (ST 8). This completes the distribution of the smart card 30 holding the public key certificate Ct and private key PRk.

A user inserts the smart card 30 into a card reader/writer (card R/W) 41 of the user terminal 40, and can use a predetermined public key cryptosystem using the smart card 30 for any desired remote computer through the network (not shown).

When updating the private key PRk and public key certificate Ct, the smart card 30 is collected and the above-mentioned steps ST 1 - ST 8 are executed. At a periodic update of the private key PRk, if any, steps ST7 and ST8 are executed for the collected smart card 30 when the expiry date of that card 30 is after the next update time, and these steps are executed for a new smart card 30* when the expiry date is before or the same as the next update time.

A reference update period of a private key is once a year, for example. The expiry date of a smart card is usually set longer than the update period of a private key, for example, five years.

However, in the above-mentioned public key infrastructure (PKI) based system, there is a problem that collection and redistribution of a smart card 30 take time and labor when updating a private key Pk and a public key certificate Ct.

An object of the present invention is to provide a public key infrastructure (PKI) based system, method, device and program which save the time and labor required by collection and redistribution of a portable device when updating a private key and a public key certificate.

According to a first aspect of the invention, there is provided a public key infrastructure (PKI) based system comprising an issue system to issue a portable device used for public key cryptosystem, and a user terminal to input optional data into the portable device issued by the issue system; wherein the issue system comprises a means for issuing the portable device which has a first encryptor/decryptor for the public key cryptosystem, a second encryptor/decryptor for a symmetric cipher issuing system and a symmetric key used in the second encryptor/decryptor; and a means for sending the user terminal an encrypted private key made by encyrpting a private key used by the first encryptor/decryptor by the symmetric key and a public key certificate of a public key corresponding to the private key, concerning the portable device issued by the issuing means.

Since an issue system issues a portable device is issued first, then sends a user terminal an encrypted private key and a public key certificate to be inputted in the portable device, when updating a private key and a public key certificate, all the necessary operations is to send a user terminal the encrypted private key and public key certificate to be updated, unlike a conventional system requiring collection of a portable device.

The user terminal receives the encrypted private key and public key certificate from the key sending means, and inputs them into a portable device. The portable device stores the inputted public key certificate, and at the same time the second encryptor/decryptor decrypts the inputted encrypted private key by the symmetric key, and stores the obtained private key. Therefore, it becomes unnecessary to collect and redistribute a portable device when updating a private key and a public key certificate, saving time and labor.

According to a second aspect of the present invention, there is provided a method of issuing a portable device for a user terminal which can input optional data contents into the portable device used for a public key cryptosystem. The method comprises issuing the portable device which has a first encryptor/decryptor for the public key cryptosystem, a second encryptor/decryptor for a symmetric cipher issuing system and a symmetric key used in the second encryptor/decryptor; and sending the user terminal an encrypted private key made by encyrpting a private key used by the first encryptor/decryptor by the symmetric key and a public key certificate of a public key corresponding to the private key, concerning the portable device issued by the issuing means.

With this method of the second aspect, as in the first aspect, the time and labor required by collection and redistribution of a portable device when updating a private key and a public key certificate, can also be saved.

According to a third aspect of the present invention, there is provided a computer program saved in a computer readable medium and used in an issue system to issue the portable device for a user terminal which can input optional data contents into the portable device used for a public key cryptosystem. The computer program comprises a first program code for issuing the portable device which has a first encryptor/decryptor for the public key cryptosystem, a second encryptor/decryptor for a symmetric cipher issuing system and a symmetric key used in the second encryptor/decryptor; a second program code for registering an encrypted private key made by encrypting a private key used by the first encryptor/decryptor by the symmetric key and a public key certificate of a public key corresponding to the private key, concerning the portable device issued by the issuing means; and a program code for sending the user terminal the registered encrypted private key and public key certificate.

In the third aspect, as in the first aspect, the time and labor required by collection and redistribution of a portable device when updating a private key and a public key certificate can also be saved.

According to a fourth aspect of the present invention, there is provided a computer program saved in a computer readable medium and used in a user terminal which can input/output predetermined contents into/from a portable device that is used for a public key cryptosystem and issued by an issue system. The computer program comprises a first program code for inputting an encrypted private key and a public key certificate sent from the issue system when issuing or updating a key.

In the fourth aspect, as in the first aspect, the time and labor required by collection and redistribution of a portable device when updating a private key and a public key certificate, can also be saved.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic diagram showing the structure of a conventional card issuing system;
FIG. 2 is a flowchart explaining the operations of a conventional card issuing system;
FIG. 3 is a schematic diagram showing a public key infrastructure (PKI) based system including a card issuing system according to a first embodiment of the invention;
FIG. 4 is a table showing the configuration of a system DB in the system of the same embodiment;
FIG. 5 is a table showing a modification of the system DB in the system of the same embodiment;
FIG. 6 is a flowchart explaining the operations in the system of the same embodiment;
FIG. 7 is a flowchart explaining the operations in the system of the same embodiment;
FIG. 8 is a schematic diagram showing the structure of a card issuing system according to a second embodiment of the present invention;
FIG. 9 is a schematic diagram explaining the functions of a user terminal in the system of the same embodiment;
FIG. 10 is a schematic diagram explaining another functions of a user terminal in the system of the same embodiment;
FIG. 11 is a schematic diagram explaining data update in a card issuing system according to a third embodiment of the present invention;
FIG. 12 is a schematic diagram explaining data update in the system of the same embodiment;
FIG. 13 a schematic diagram explaining data update in the system of the same embodiment;
FIG. 14 a schematic diagram explaining data update in the system of the same embodiment;
FIG. 15 is a tables explaining the effect in the system of the same embodiment;
FIG. 16 is a schematic diagram explaining data update in a card issuing system according to a fourth embodiment of the present invention;
FIG. 17 is a schematic diagram explaining data update in the system of the same embodiment;
FIG. 18 is a schematic diagram explaining data update in the system of the same embodiment;
FIG. 19 is a schematic diagram explaining data update in the system of the same embodiment;
FIG. 20 is a schematic diagram explaining data update in the system of the same embodiment;
FIG. 21 is a schematic diagram explaining data update in a card issuing system according to a fifth embodiment of the present invention;
FIG. 22 is a schematic diagram explaining data update in the system of the same embodiment;
FIG. 23 is a schematic diagram explaining data update in the system of the same embodiment; and
FIG. 24 is a schematic diagram explaining data update in the system of the same embodiment.

Hereinafter, preferred embodiments of the present invention will be explained with reference to the accompanying drawings. In the following embodiments, a smart card is used as a portable device, and a personal computer is used as a user terminal. However, the invention is not to be limited by these preferred embodiments. Modifications are possible by using a portable telephone or other personal digital assistants as a portable device, or using a chip as a portable device and adopting a chip in these personal digital assistants or a portable telephone. Further, it is also possible to make a portable device and a user terminal in one body as a portable telephone or a personal digital assistant.

### (Embodiment 1)

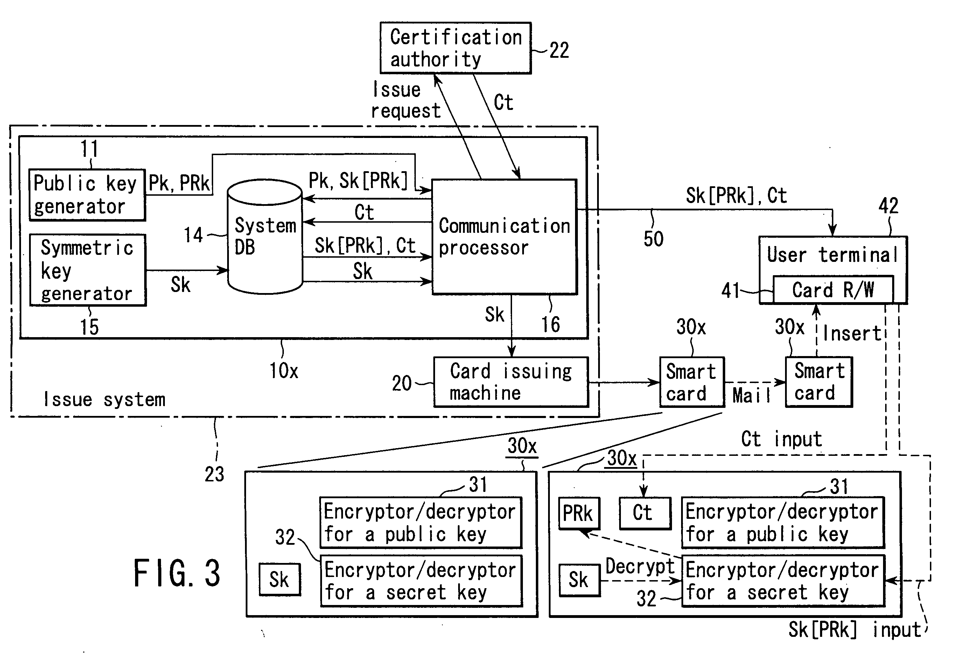

FIG. 3 is a schematic diagram showing a public key infrastructure (PKI) based system including a card issuing system according to a first embodiment of the invention (hereinafter referred to simply as a card issuing system). The same parts as those shown in the preceding drawings are denoted by the same numerals, and the detailed explanation will be omitted. Only the different parts will be explained in the other embodiments.

In the first embodiment, from the viewpoint of saving the time and labor to collect and redistribute a smart card when updating a private key PRk and a public key certificate Ct, a smart card 30x holding a symmetric key Sk is distributed to the user instead of a private key PRk and a public key certificate Ct when the key and certificate are newly issued, and at the same time a private key Sk [PRk] encrypted to be decryptable by a symmetric key Sk and a (non-encrypted) public key certificate Ct are distributed to a user terminal 42 through a network 50. Namely, the smart card 30x gets a private key PRk by decrypting the encrypted private key Sk [PRk] by using a symmetric key Sk.

In a system server 10x, a symmetric key generator 15 is added to generate a symmetric key Sk for each user ID and register it in a system DB 14, and a communication processor 16 having the following functions is provided, instead of the above-mentioned conventional communication processor 13.

That is, in addition to the function of communicating with the certification authority 22, and registering a public key certificate Ct sent from the certification authority 22 in the system DB 14, the communication processor 16 of this embodiment has the following functions (f16-1) - (f16-3):
(f16-1) Function of sending a symmetric key Sk for each user ID saved in the system DB 14 to a card issuing machine 20.
(f16-2) Function of encrypting a private key PRk generated by a public key generator 11, by using a symmetric key Sk saved in the system DB 14, and registering it in the system DB 14 as an encrypted private key Sk [PRk].
(f16-3) Function of sending the encrypted private key Sk [PRk] and the public key certificate Ct from the system DB 14, to the user terminal 40 through the network 50.

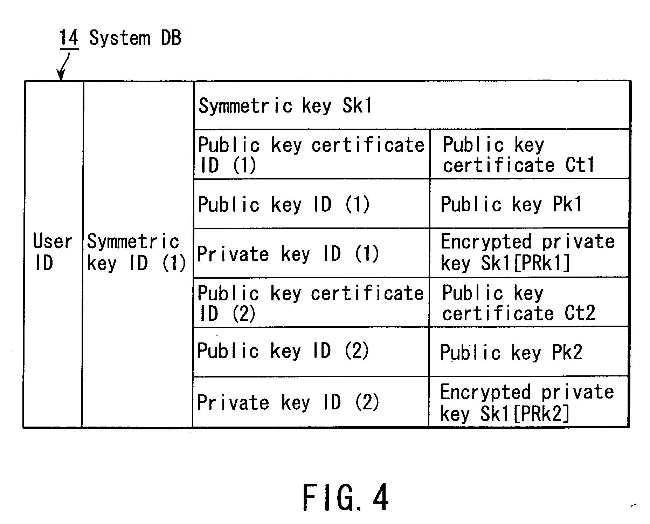

It is to be noted that the system DB 14 registers at least symmetric key Sk, a public key Pk and an encrypted private key Sk [PRk] for each user ID, for example, as shown in FIG. 4. Here, a public key certificate Ct and its ID are also registered, for convenience's sake.

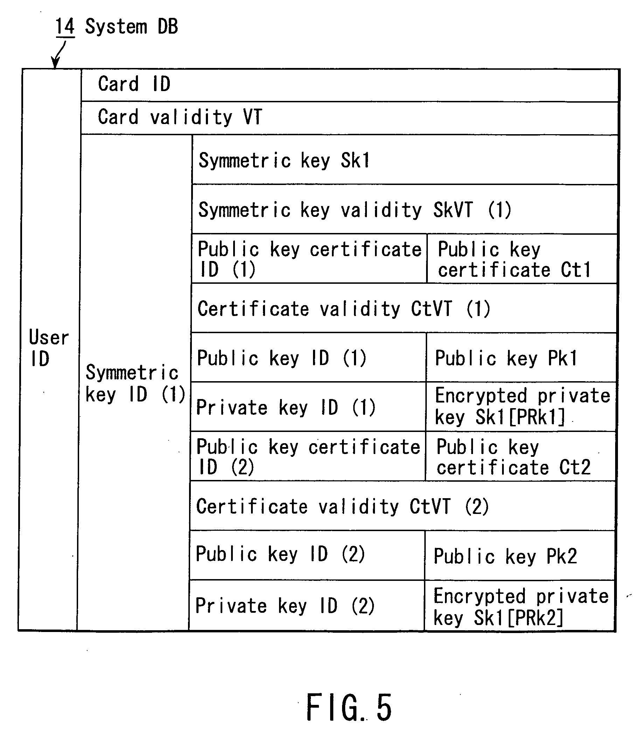

It is also to be noted that the system DB may store a card ID, a card validity VT, a symmetric key validity SkVT or a certificate validity CtVt as needed, as shown in FIG. 5. Further, the system DB 14 may store PIN for certification or optional user information, though the are not shown in the drawings. It is apparent that such modifications are included in the designing and not departing from the scope of the present invention, even if the memory contents of the system DB 14 are dispersed and stored in two or more DBs.

A user terminal 42 has, in addition to the above-mentioned function, the function of inputting an encrypted private key Sk [PRk] and a public key certificate Ct from a system server 10x through the network 50, into a smart card 30x, responding to the user's operation.

A smart card 30x has the function of holding in the memory the symmetric key Sk written in the card issuing machine 20, and contains an encryptor/decryptor 32 for this symmetric key Sk, in addition to the above-mentioned encryptor/decryptor 31 for the key pair and the function of holding in the memory a private key PRk and a public key certificate Ct.

The encryptor/decryptor 32 for the symmetric key Sk is used to prevent leakage of a non-encrypted private key PRk. It generates a usable private key PRk by decryption and stores it in the smart card 30x, and generates an unusable encrypted private key Sk [PRk] by encryption and outputting it to the outside of the smart card 30x.

More specifically, the encryptor/decryptor 32 for the symmetric key Sk has the function of decrypting the encrypted private key Sk [PRk] from the user terminal 40 by the symmetric key Sk based on the write control from the user terminal 40, and writing the obtained private key PRk in the memory; and the function of encrypting the private key PRk by the symmetric key Sk in the memory based on the read control from the user terminal 42, and outputting the obtained encrypted private key Sk [PRk] to the user terminal 42.

A private key PRk may be outputted as an encrypted private key Sk [PRk], but a symmetric key Sk is never outputted from a smart card 30x. Namely, a symmetric key Sk and a smart card 30x are made in one inseparable unit. This structure can be realized as a tamperproof portion (not shown). A tamperproof portion prevents output of a symmetric key Sk from a smart card 30x when being attacked from the outside. A tamperproof portion is realized as hardware or hardware-software combination. In the case of hardware, a tamperproof portion is realized as a tamper-resistant circuit to erase a symmetric key Sk in the memory when a smart card 30x is broken down. In the case of hardware-software combination, a tamperproof portion is realized as software to judge whether an external input signal is an attack to the system. It is also realized as a hardware circuit to erase a symmetric key Sk in the memory when an external input signal is judged to be an attack signal. An attack signal will force the system to output a symmetric key Sk regardless of whether the key is encrypted or not, for example. Therefore, it is possible to discriminate an attack signal by registering it beforehand.

A system server 10x, a user terminal 42 and a smart card 30x can be realized by reading each program, which is stored in different media or in the same medium, into each computer. This is the same in all embodiments to be explained hereinafter.

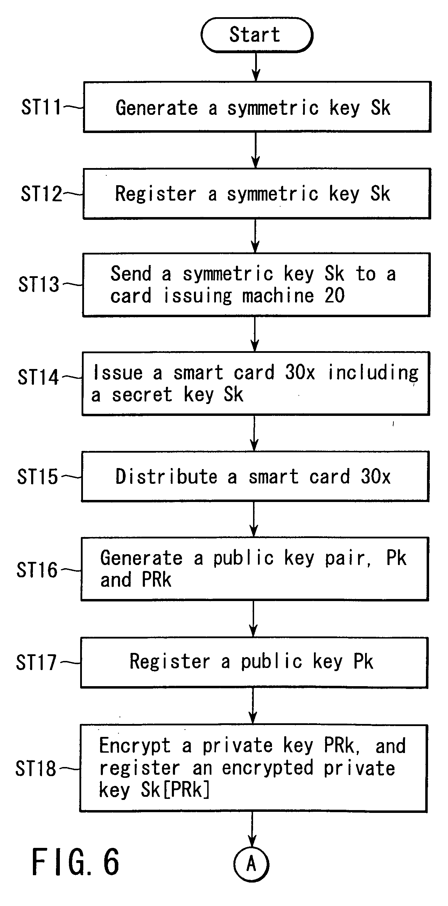

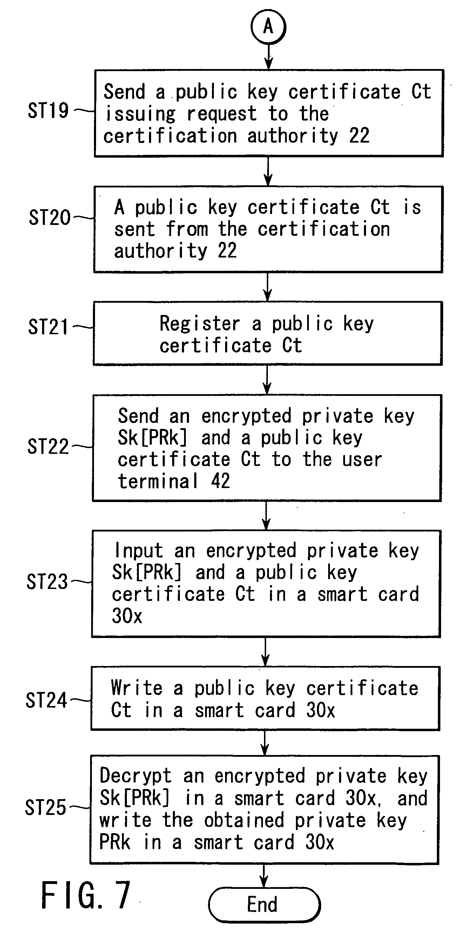

Now, the operations of a card issuing system constructed as above will be explained hereinafter by referring to the flowcharts of FIGS. 6 and 7.

In the issue system 23, when issuing a new private key PRk and public key certificate Ct, the symmetric key generator 15 of the system server 10x generates a symmetric key Sk for each user ID (ST 11) and registers this symmetric key Sk in the system DB 14 (ST 12), responding to the operator's operation.

Next, the communication processor 16 of the system server 10x delivers a symmetric key Sk for each user ID from the system DB to the card issuing machine 20 (ST 13).

The card issuing machine 20 writes the received symmetric key Sk into the memory of a smart card 30x, and issues a smart card 30x corresponding to the user ID (ST 13). This smart card 30x is distributed to the user by mail or the like (ST 15).

Receiving the smart card 30x, the user demands the issue system 23 to distribute a public key certificate Ct and a private key PRk. This demand can be made also by e-mail, telephone, mail or fax.

Receiving the user's demand, the public key generator 11 of the issue system 23 generates a key pair and delivers it to the communication processor 16, as described hereinbefore (ST 16). The communication processor 16 registers the public key Pk of the key pair in the system DB 14 for each user ID (ST 17), and encrypts the private key PRk by the symmetric key Sk and registers it as an encrypted private key Sk [PRk] in the system DB 14 for each user ID (ST 18).

Then, as shown in FIG. 7, the communication processor 16 sends a public key certificate Ct issuing request to the certification authority 22 (ST 19), receives a public key certificate Ct (ST 20) from the certification authority, and registers this public key certificate Ct in the system DB 14 (ST 21).

Thereafter, the communication processor 16 reads the encrypted private key Sk [PRk] and public key certificate Ct corresponding to the user ID saved in the system DB 14, and sends them to the user terminal 42 through the network 50 (ST 22).

Receiving the encrypted private key Sk [PRk] and public key certificate Ct, the user terminal 42 inputs the encrypted private key Sk [PRk] and public key certificate Ct into a smart card 30x, responding to the user's operation (ST 23).

When the public key certificate Ct is written into the memory of the smart card 30x (ST 24), the encryptor/decryptor 32 for the symmetric cipher issuing system decrypts this encrypted private key Sk [PRk] by the symmetric key Sk in the memory, and writes the obtained private key PRk into the memory (ST 25). This completes the distribution of a private key PRk and a public key certificate Ct to a smart card 30x.

Thereafter, the user can use the public key cryptosystem in the predetermined form for other computers (not shown) on the network 50, simply by inserting a smart card 30x into the card R/W 41 of the user terminal 42. The predetermined form means digital signature generation/verification and encryption/decryption by the encryptor/decryptor 31 for the key pair, for example.

When updating a private key PRk and a public key certificate Ct, the user simply makes a distribution request after step ST 15. The system will execute steps ST 16 - ST 23, and complete the distribution of new private key PRk and public key certificate Ct. Namely, unlike the conventional system, it is unnecessary to collect and redistribute a smart card 30x, when updating a private key PRk and a public key certificate Ct.

As explained above, according to the first embodiment of the invention, the issue system 23 first issues a smart card 30x, then sends an encrypted private key Sk [PRk] and a public key certificate Ct, which are to be inputted into a smart card 30x, to the user terminal 42. Therefore, when updating a private key and public key certificate, all the necessary operation is to send the user terminal 42 an encrypted private key and a public key certificate to be updated, unlike the conventional system.

In the user terminal 42, the received encrypted private key and public key certificate are inputted into a smart card 30x to store the inputted public key certificate Ct therein, and at the same time the encryptor/decryptor 32 decrypts the inputted encrypted private key Sk [PRk] based on the symmetric key Sk, and stores the obtained private key PRk.

Therefore, when updating a private key and public key certificate, the time and labor required to collect and redistribute a smart card can be saved.

### (Embodiment 2)

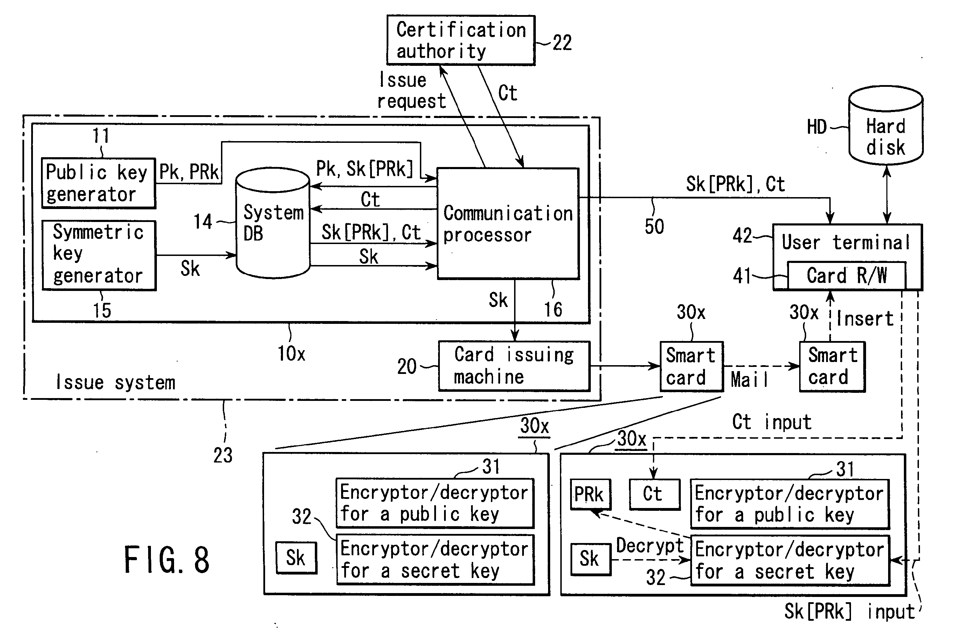

FIG. 8 is a schematic diagram showing the structure of a card issuing system according to a second embodiment of the present invention. The second embodiment is a specific form of the first embodiment of the invention. It permits use of more number of private keys PRk and public key certificates Ct than those storable in the memory of a smart card 30x. A hard disk HD is added as a temporary memory for the data overflowing a smart card 30x. A user terminal 42 is connected to this hard disk HD.

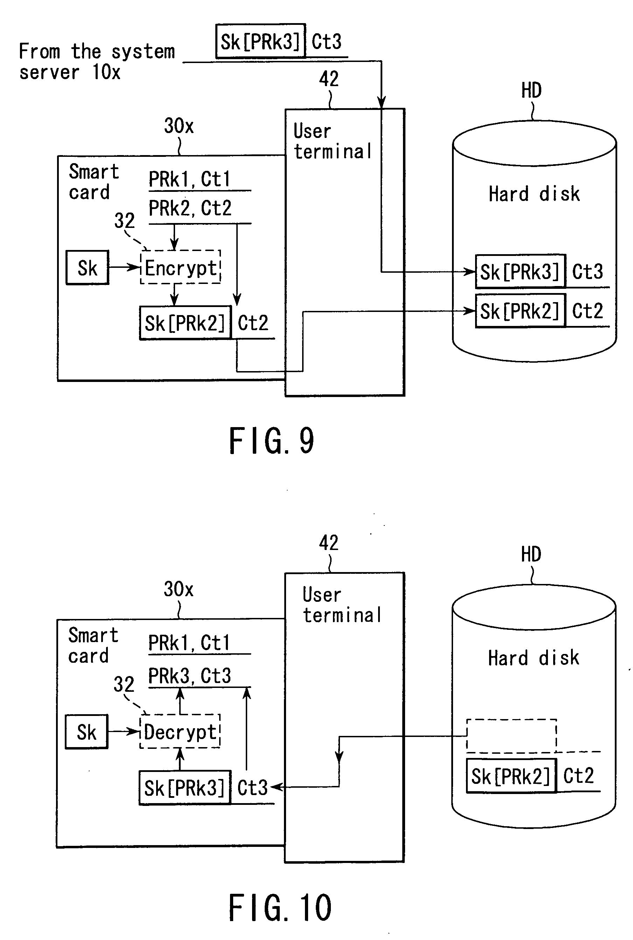

Particularly, as shown in FIG. 9, the user terminal 42 has the function of saving in the hard disk HD a pair of encrypted private key Sk [PRk3] and public key certificate Ct3 received from a system server 10x by step ST 22, or a pair of encrypted private key Sk [PRk2] and public key certificate Ct2 read from a smart card 30x, when the remaining memory space of a smart card becomes insufficient due to updating of data or the like. The user terminal 42 also has the function of inputting a pair of the encrypted private key Sk [PRk3] and public key certificate Ct3 saved in the hard disk HD into a smart card, responding to the user's operation, as shown in FIG. 10.

A private key PRk is protected against leakage, as explained hereinbefore, and it is never outputted from a smart card 30x in being non-encrypted state. A private key PRk is always encrypted by the encryptor/decryptor for the symmetric cipher issuing system (as an encrypted private key Sk [PRk]) when it is outputted from a smart card 30x.

As described hereinbefore, a smart card 30x has the function of decrypting the encrypted private key Sk [PRk] received from the user terminal 42 by the encryptor/decryptor 32 for the symmetric cipher issuing system based on a symmetric key Sk, and writing the obtained private key PRk into the memory.

In the above-mentioned structure, in addition to the effect of the first embodiment, when the remaining memory space of a smart card 30x becomes insufficient, the pair of encrypted private key Sk [PRk2] and public key certificate Ct2 read from a smart card 30x is transferred to the hard disk HD. This makes it possible to store in the smart card 30x a new pair of encrypted private key Sk [PRk3] and public key certificate Ct3 received from the system server 10x.

That is, when the remaining memory space of a smart card 30x runs short, new data can be stored in the smart card 30x without destructing the data already stored therein.

The hard disk HD is just an example of storage media, and is replaceable by other media as long as they are readable by a computer. The second embodiment can be implemented with same effect even with other media.

### (Embodiment 3)

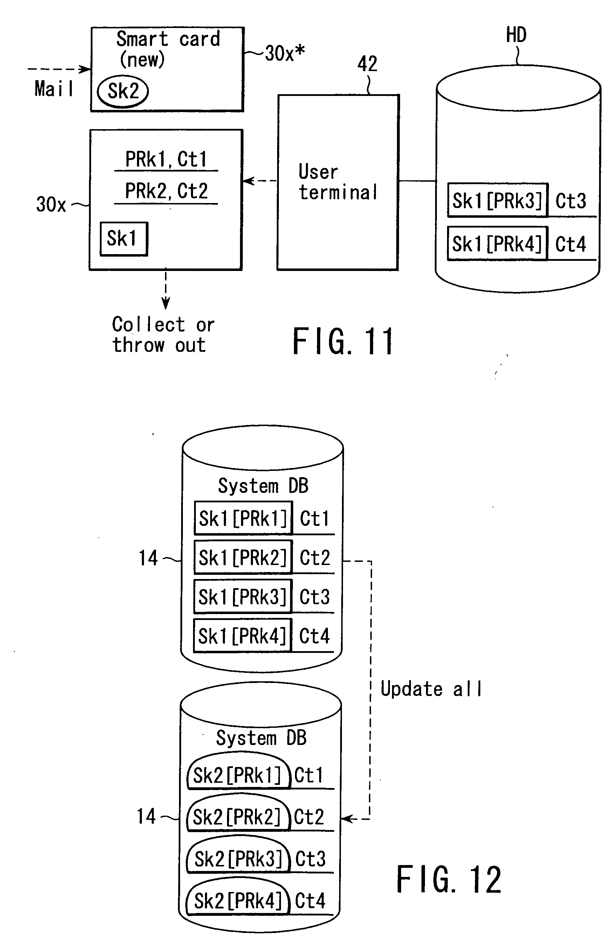

FIG. 11 - FIG. 14 are schematic diagrams to explain data update in a card issuing system according to a third embodiment of the present invention.

The third embodiment is a specific form of the first and second embodiments, but unlike these two embodiments, it illustrate the case of updating an old symmetric key Sk1 to a new symmetric key Sk2. In other words, this embodiment relates to updating an old smart card 30x to a new smart card 30x*.

Specifically, this embodiment relates to the case of redistributing all already distributed pairs of encrypted private key and public key certificate when updating an old symmetric key Sk1 to a new symmetric key Sk2. Four key pairs will be explained here.

Now, it is assumed that the system server 10x detects the necessity of updating the current symmetric key Sk1 to a new symmetric key Sk2 based on the symmetric key validity SkVT control in the system DB 14 shown in FIG. 7, and notifies it, and this updating of the symmetric key Sk1 is approved by the system administrator (operator).

The issue system 23 issues a new smart card 30x* including a new symmetric key Sk2 instead of an old symmetric key Sk1, and mails it to the user, by executing steps ST 11 - ST 15 described above.

The user receives the new smart card 30x* and makes the distribution request as already explained, as shown in FIG. 11.

It is also assumed that the smart card 30x being used by the user holds the pairs of private keys and public key certificates {PRk1, Ct1}, {PRk2, Ct2} and the symmetric key Sk1, and shall be thrown out later by the user or collected by the issue system 23. It is further assumed that the hard disk HD saves the pairs of private keys and public key certificates {Sk1 [PRk3], Ct3} and {Sk1 [PRk4], Ct4}.

Receiving the distribution request from the user, the issue system 23 executes steps ST 16 to ST 21, generation of a key pair to registration of public key certificate Ct, as explained before, when a key pair is to be added. However, this embodiment concerns the case where a key pair is not added, steps ST 16 to ST 18 are omitted.

As the symmetric key Sk2 is updated, the system server 10x re-encrypts all the encrypted private keys Sk1 [PRk1] - Sk1 [PRk4] in the system DB 14 based on the new symmetric key Sk2, as shown in FIG. 12, without executing step ST 18, and updates and registers these re-encrypted private keys Sk2 [PRk1] - Sk2 [PRk4] in the system DB 14.

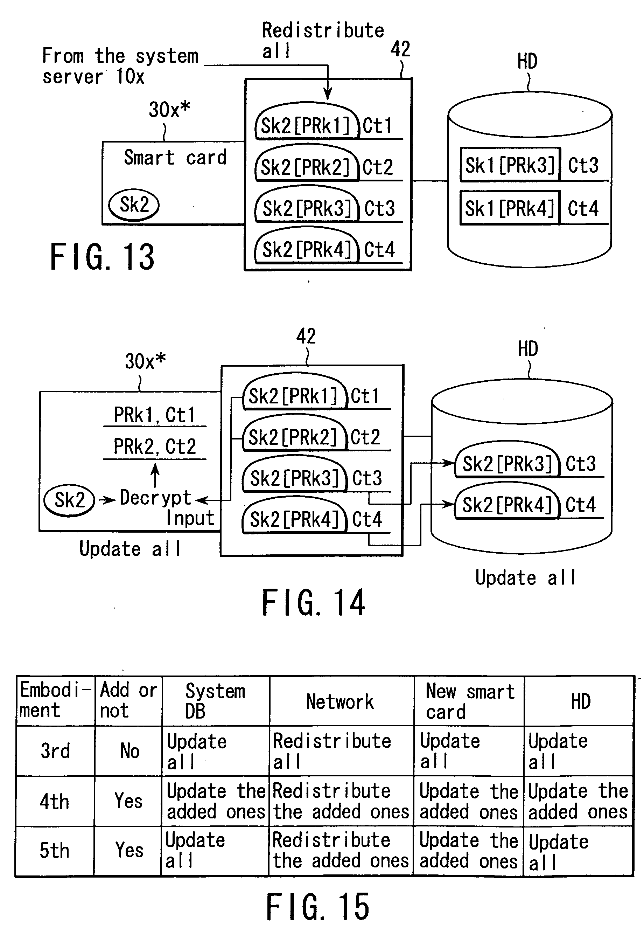

After the updating and registration, the system server 10x sends the user terminal 42 all the pairs of encrypted private keys and public key certificates {Sk2 [PRk1], Ct1}, {Sk2 [PRk2], Ct2}, ..., {Sk2 [PRk4], Ct4} corresponding to the user ID in the system DB 14, as already explained, as shown in FIG. 13.

The user terminal 42 inputs the pairs of encrypted private keys and public key certificates {Sk2 [PRk1], Ct1} and {Sk2 [PRk2], Ct2} sequentially into a new smart card 30x*, as already explained, as shown in FIG. 14.

In the smart card 30x*, as explained hereinbefore, the public key certificate Ct1 is written in the memory, and the encryptor/decryptor for the symmetric cipher issuing system decrypts the encrypted private key Sk2 [PRk1] by the common Sk2 in the memory, and writes the obtained private key PRk1 into the memory. Likewise, the second public key Ct2 and private key PRk2 are also written in the memory.

On the other hand, the third and fourth pairs of encrypted private keys and public key certificates {Sk2 [PRk3], Ct3} and {Sk2 [PRk4], Ct4} are overwritten on the hard disk HD by the user terminal 42.

This completes the distribution of private key PRk and public key certificate Ct to the smart card 30x*.

As described above, in addition to the effects of the first and second embodiments, the third embodiment of the invention provides certain effect when updating an old symmetric key Sk1 to a new symmetric key Sk2, that is, when updating an old smart card 30 to a new smart card 30*.

In the third embodiment, as shown in FIG. 15, it is necessary to update and redistribute all pairs of encrypted private key Sk [PRk] and public key certificate Ct.

Now, it is to be noted that the term "Add or not" in the table of FIG. 15 means whether to add a new encrypted private key Sk [PRk] and public key certificate Ct, and "System DB" means the encrypted private key Sk [PRk] to be updated among those saved for each user ID in the system DB.

It is also to be noted that the term "Network" means which encrypted private key Sk [PRk] among those updated in the system DB 14 is to be sent over the network 50. The term "New smart card" means the which content of an old smart card 30x (a symmetric key Sk, a private key PRk, and a public key certificate Ct) is to be updated in a new smart card 30x*. Likewise, the term "HD" means which content of the hard disk HD (a pair of encrypted private key Sk [PRk] and public key certificate Ct) is to be updated.

That is, the third embodiment relates to the case where a new encrypted private key Sk [PRk] and a public key certificate Ct are not added when updating a symmetric key Sk2. As all encrypted private keys and public key certificate are updated and redistributed, it is possible to build up a public key cryptosystem by using the private key PRk concealed by the updated symmetric key Sk2.

### (Embodiment 4)

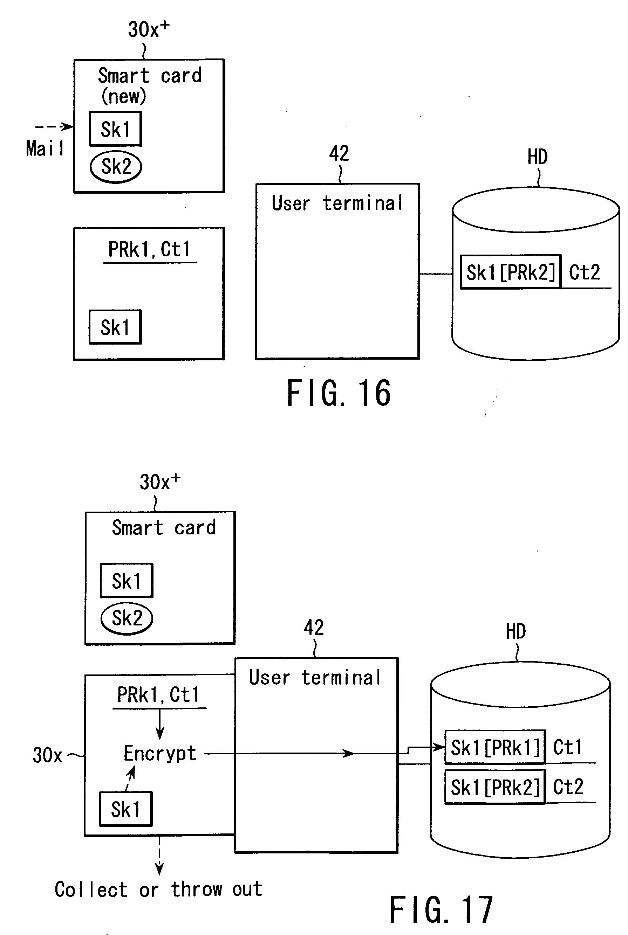

FIG. 16 - FIG. 20 are schematic diagrams to explain data update in a card issuing system according to a fourth embodiment of the present invention.

The fourth embodiment is a modification of the third embodiment, and it relates to the case where an old smart card 30x holding an old symmetric key Sk1 is updated to a new smart card 30x⁺ holding old and new symmetric keys Sk1 and Sk2, and where a new encrypted private key Sk [PRk] and a public key certificate Ct are added.

More specifically, the fourth embodiment relates to the case where the already distributed pair of encrypted private key Sk1 [PRk1] and public key certificate Ct1, for example, is not updated/distributed, and a new pair of encrypted private key Sk2 [PRk3] and public key certificate Ct3, for example, is updated/distributed, when updating an old symmetric key Sk1 to a new symmetric key Sk2. This is implemented as follows.

It is assumed as in the previous embodiment that the updating of a symmetric key Sk1 is approved. A system server 10x issues a new smart card 30x⁺ holding a current symmetric key Sk1 and a new symmetric key Sk2, and mails it to the user, as shown in FIG. 16.

Now, it is also assumed that a smart card 30 being used by the user stores a pair of private key and public key certificate {PRk1, Ct1} and symmetric key Sk1, and the hard disk HD saves a pair of private key and public key certificate {Sk1 [PRk2], Ct2}.

Receiving a new smart card 30x⁺, the user encrypts the private key PRk1 and public key certificate Ct1 stored in the old smart card 30x, as shown in FIG. 17, by operating the user terminal 42, and transfers them to the hard disk HD as an encrypted private key Sk1 [PRk1] and a public key certificate Ct1.

The user makes a distribution request to the issue system 23, as already explained.

Receiving the distribution request from the user, the issue system 23 executes steps ST 16 to ST 21, generation of a key pair to registration of a public key certificate Ct, as explained before, because a key pair is to be added in this case.

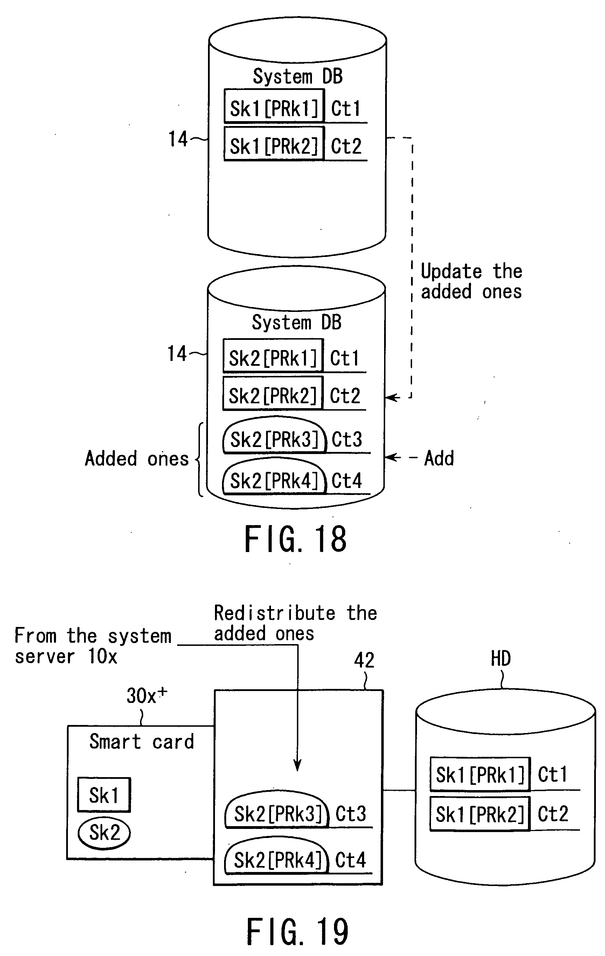

Here, as a symmetric key Sk2 is updated and a key pair is added, the system server 10x updates and registers a pair of new encrypted private key Sk2 [PRk3] and a public key certificate Ct3 {Sk2 [PRk3], Ct3}, {Sk2 [PRk4], Ct4} into the system DB 14 by a new symmetric key Sk2, by steps ST 16 - ST 21, as shown in FIG. 18.

After the updating and registration, the system server 10x sends the user terminal 42 the pair of added encrypted private key and public key certificate {Sk2 [PRk3], Ct3}, {Sk2 [PRk4], Ct4} among all pairs of encrypted private key and public key certificates corresponding to the user IDs in the system DB 14, as shown in FIG. 19.

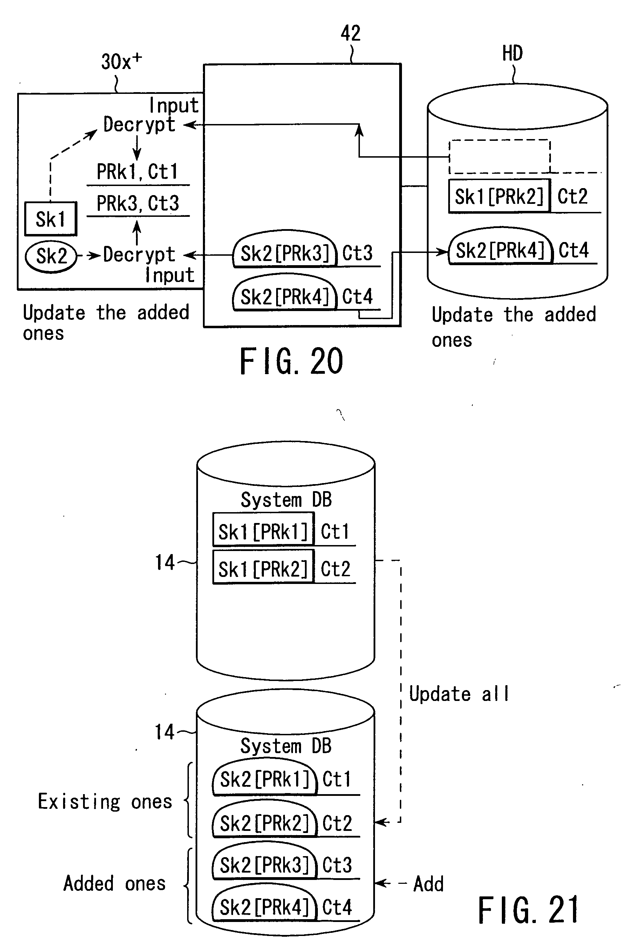

The user terminal 42 inputs the pair of encrypted private key and public key certificate {Sk2 [PRk1], Ct1} and {Sk2 [PRk3], Ct3} sequentially into a new smart card 30x⁺, as already explained, as shown in FIG. 20, and stores the pair of encrypted private key and public key certificate {Sk2 [PRk4], Ct4}, which cannot be inputted into the new smart card 30x⁺, into the hard disk HD.

In the smart card 30x*, as already explained, the public key certificate Ct1 is written in the memory, and the encrypted private key Sk2 [PRk1] is decrypted by the symmetric key Sk2, and the obtained private key PRk1 is written into the memory. Likewise, the third public key Ct3 and private key PRk3 are also written in the memory.

This completes the distribution of private key PRk and public key certificate Ct to the smart card 30x⁺.

As described above, in addition to the effects of the first and second embodiments, the fourth embodiment of the invention provides certain effect when updating a smart card 30x⁺ holding old and new symmetric keys Sk1, Sk2, and when a new encrypted private key Sk [PRk] and public key certificate Ct are added.

In the fourth embodiment, as shown in FIG. 15, it is necessary to update and redistribute the pair of additional encrypted private key Sk [PRk] and public key certificate Ct.

That is, the fourth embodiment relates to the case where a new encrypted private key Sk [PRk] and public key certificate Ct are added when updating the symmetric key Sk2. As the additional encrypted private key and public key certificate are updated and redistributed, it is possible to build up a public key cryptosystem by using the private key PRk concealed by the updated symmetric keys Sk1 and Sk2.

### (Embodiment 5)

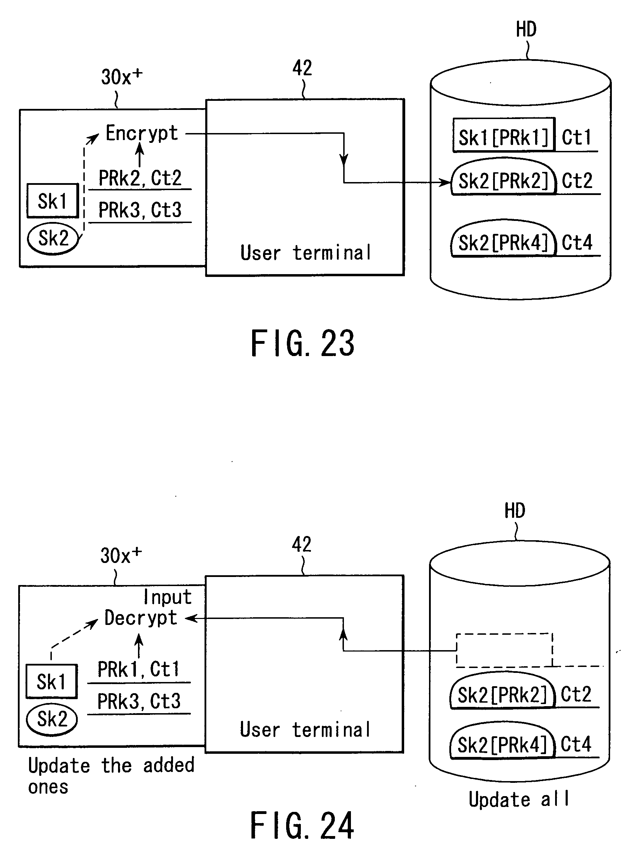

FIG. 21 - FIG. 24 are schematic diagrams to explain data update in a card issuing system according to a fifth embodiment of the present invention.

The fourth embodiment is a modification of the fourth embodiment, and is similar to the fourth embodiment in that a new encrypted private key Sk [PRk] and public key certificate Ct are added when adding and updating a symmetric key Sk2, but different in that all encrypted private keys and public key certificates are updated.

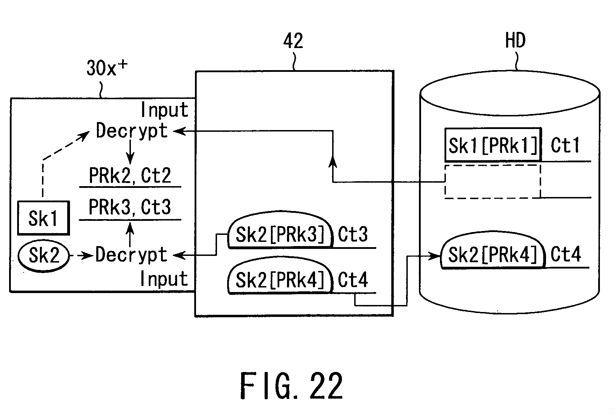

More specifically, the fifth embodiment is different from the fourth embodiment in the following points (a) and (b):
(a) Updating current encrypted private keys Sk1 [PRk1], Sk1 [PRk2] to encrypted private keys Sk2 [PRk1], Sk2 [PRk2] by a new symmetric key Sk2, as shown in FIG. 21 modified from FIG. 18.
(b) Updating a current encrypted private key Sk1 [PRk2] saved in the hard disk HD to an encrypted private key Sk2 [PRk2] by a new symmetric key Sk2, as shown in FIG. 22 - FIG. 24 modified from FIG. 20.

Although it is necessary to update all current encrypted private keys Sk [PRk] saved in the system DB 14 or hard disk HD, the fifth embodiment provides the same effect as that of the fourth embodiment, by redistributing the additional encrypted private key Sk [PRk] and public key certificate Ct.

Since the additional encrypted private key and public key certificate are updated and redistributed as in the fourth embodiment, it is possible with the fifth embodiment to build up a public key cryptosystem by using the private key PRk concealed by the updated common Sk1 and Sk2.

The technology described in relation to the above embodiments can be embodied as a program executable by a computer. The program can be distributed to people after being stored in recording mediums, including a magnetic disk (e.g., a floppy disk or a hard disk), an optical disk (e.g., a CD-ROM or a DVD), a magnetooptical disk (MO) or a semiconductor memory.

The recording mediums can use any recording format as long as they can store a program and are readable by a computer.

An OS (Operating System) which a computer executes on the basis of a program installed on a computer from a recording medium, MW (middleware) such as database management software, network software, etc. may be part of the processing that realizes the present embodiment.

Moreover, a recording medium used in the present invention is not limited to a medium that is independent of a computer; it may be any kind of recording medium as long as it can store or temporarily store a program downloaded from a LAN or the Internet.

Two or more recording mediums may be used. In other words, the present invention covers the case where the processing of the embodiment is executed by use of two or more recording mediums. It should be also noted that the recording mediums may be of any structure as long as they fulfill the functions required.

The computer used in the present invention executes the processing on the basis of the program stored in a storage medium. As long as this function is satisfied, the computer may be of any structure. It may be a single personal computer, a system wherein a plurality of apparatuses are connected as a network, etc.

The computer used in the present invention is not limited to a personal computer; it may be an operation executing apparatus, a microcomputer or the like that is included in an information processing apparatus. The concept "computer" used in the present invention is intended to mean any kind of apparatus or device that can achieve the functions of the present invention on the basis of a program.

The present invention is not limited to the embodiments described above. When reduced to practice, each of the embodiments described above can be modified in various manners without departing from the spirit of the invention. The embodiments described above can be combined, if so desired. In such a combination, advantages produced may be unique to that combination. It should be noted that the embodiments contain inventions of various stages, and the structural elements of the inventions can be modified to derive other inventions. If an invention is derived by omitting some structural elements from the embodiments, the omitted structural elements can be compensated for with known technology when the derived invention is reduced to practice.

Lastly, the present invention can be modified in various manners without departing from the spirit of the invention.

## Claims

1. A public key infrastructure (PKI) based system comprising an issue system (23) to issue a portable device (30x) used for a public key cryptosystem, and a user terminal (42) to input optional data into the portable device issued by said issue system, said issue system **characterized by** comprising:
a means (10x, 20) for issuing said portable device (30x) which has a first encryptor/decryptor (31) for said public key cryptosystem, a second encryptor/decryptor (32) for a symmetric cipher issuing system and a symmetric key (Sk) used in said second encryptor/decryptor; and
a means (16) for sending said user terminal (42) an encrypted private key (Sk[PRk]) made by encrypting a private key (PRk) used by said first encryptor/decryptor (31) by said symmetric key (Sk) and a public key certificate (Ct) of a public key corresponding to said private key (PRk), concerning the portable device issued by said portable device issuing means.

2. A method of issuing a portable device (30x) for a user terminal (42) which can input optional data contents into said portable device used for a public key cryptosystem, said method **characterized by** comprising:
issuing said portable device which has a first encryptor/decryptor (31) for said public key cryptosystem, a second encryptor/decryptor (32) for a symmetric cipher issuing system and a symmetric key (Sk) used in said second encryptor/decryptor; and
sending said user terminal (42) an encrypted private key made by encrypting a private key (Sk[PRk]) used by said first encryptor/decryptor (31) by said symmetric key (Sk) and a public key certificate (Ct) of a public key corresponding to said private key, concerning the portable device issued by said issuing means.

3. The method for issuing a portable device according to claim 2, **characterized in that**:
said user terminal (42) inputs said encrypted private key (Sk[PRk]) and a public key certificate (Ct) into said portable device (30x); and
said portable device (30x) stores said inputted public key certificate (Ct), and said second encryptor/decryptor (32) decrypts said inputted encrypted private key based on said symmetric key (Sk), and stores the obtained private key (PRk).

4. The method for issuing a portable device according to claim 2, **characterized by** further comprising:
sending said user terminal (42) an encrypted private key made by encrypting another private key used by said first encryptor/decryptor by said symmetric key (Sk), and a public key certificate corresponding to said another private key, when updating the encrypted private key (Sk[PRk]) and public key certificate (Ct) in said portable device (30x).

5. A computer program saved in a computer readable medium and used in an issue system (23) to issue a portable device (30x) for a user terminal (42) which can input optional data contents into said portable device used for a public key cryptosystem, said computer program **characterized by** comprising:
a first program code for issuing said portable device (30x) which has a first encryptor/decryptor (31) for said public key cryptosystem, a second encryptor/decryptor (32) for a symmetric cipher issuing system and a symmetric key (Sk) used in said second encryptor/decryptor;
a second program code for registering an encrypted private key (Sk[PRk]) made by encrypting a private key (PRk) used by said first encryptor/decryptor (31) based on said symmetric key (Sk) and a public key certificate (Ct) of a public key corresponding to said private key, concerning the portable device issued by said issuing means; and
a third program code for sending said user terminal (42) said registered encrypted private key and public key certificate (Ct).

6. The computer program according to claim 5, **characterized by** further comprising:
a fourth program code for issuing another portable device which has said first encryptor/decryptor (31), said second encryptor/decryptor (32) and said another symmetric key used in said second encryptor/decryptor, when updating said symmetric key (Sk) to another symmetric key;
a fifth program code for updating said registered encrypted private key to another encrypted private key made by encrypting said private key (PRk) by said another symmetric key, concerning said another issued portable device; and
a sixth program code for sending said user terminal (42) said updated another encrypted private key and public key certificate.

7. The computer program according to claim 5, **characterized by** further comprising:
a seventh program code for additionally registering said another encrypted private key and public key certificate corresponding to another private key different from said private key (PRk), when adding another encrypted private key and public key certificate to said portable device (30x); and
an eighth program code for sending said user terminal (42) said additionally registered another encrypted private key and public key certificate.

8. A computer program saved in a computer readable medium used in a user terminal (42) which can input/output predetermined contents into/from a portable device (30x) which is used for a public key cryptosystem and issued by an issue system (23), said computer program **characterized by** comprising:
a first program code for inputting an encrypted private key (Sk[PRk]) and public key certificate (Ct) received from said issue system into said portable device, when issuing or updating a key.

9. The computer program according to claim 8, **characterized by** further comprising:
a second program code for reading at least one pair of encrypted private key (Sk[PRk]) and public key certificate (Ct) from said portable device (30x) and transferring it to an external memory (HD), when the remaining memory space of said portable device becomes insufficient when adding a key; and
a third program code for inputting said encrypted private key (Sk[PRk]) and public key certificate (Ct) to be added into said portable device, when said transfer is completed.

10. A public key infrastructure (PKI) based system for a portable device (30x) having its own symmetric key (Sk) and being applicable to either symmetric cipher issuing system or public key cryptosystem, said based system encrypting a private key (PRk) used for said public key cryptosystem by said symmetric cipher issuing system based on said symmetric key, and distributing the obtained encrypted private key (Sk[PRk]) to said portable device.

11. The public key infrastructure (PKI) based system according to claim 10, **characterized by** further comprising:
an issue system (23) which encrypts a private key (PRk) used for said public key cryptosystem based on the symmetric key (Sk) peculiar to each portable device and previously held by said each portable device, and sends the obtained encrypted private key (Sk[PRk]) to said portable device (30x), when issuing or updating said portable device;
a user terminal (42) which receives the encrypted private key (Sk[PRk]) sent from said issue system (23), and inputs said encrypted private key into said portable device; and
a portable device (30x) which decrypts the encrypted private key (Sk[PRk]) received from said user terminal (42) based on said peculiar symmetric key (Sk), and writes the obtained private key (PRk) into a memory.

12. The public key infrastructure (PKI) based system according to claim 11, **characterized in that**:
said issue system (23) comprises a means (16) for sending said encrypted private key (Sk[PRk]) and the public key certificate (Ct) corresponding thereto to said portable device (30x), when sending said encrypted private key; and
said portable device (30x) includes a means for storing said public key certificate (Ct) when said encrypted private key (Sk[PRk]) and said public key certificate are inputted.

13. A portable device (30x) **characterized in that**:
said portable device having its own symmetric key (Sk), being applicable to a symmetric cipher issuing system, and using a public key cryptosystem based on a private key distributed under the symmetric cipher issuing system using said symmetric key, said portable device further comprising:
a memory; and
a means (32) for decrypting an input encrypted private key (Sk[PRk]) based on the symmetric key (Sk) for said symmetric cipher issuing system, and writing the obtained private key (PRk) in said memory, when a private key for said public key cryptosystem is inputted in being encrypted based on a symmetric cipher issuing system.

14. The portable device according to claim 13, **characterized by** further comprising:
a first encryptor/decryptor means (31) for said public key cryptosystem; and
a second encryptor/decryptor means (32) for said symmetric cipher issuing system; wherein
said memory includes a first area which previously stores a peculiar symmetric key (Sk) used by said second encryptor/decryptor (32), and a second area to rewritably store said symmetric key and a private key decrypted based on said second encryptor/decryptor means.

15. The portable device according to claim 14, **characterized in that**:
said memory includes a third area to store a public key certificate (Ct) corresponding to said private key (PRk).

16. The portable device according to claim 14, **characterized by** further comprising;
a means (32) for encrypting said private key (PRk) based on the symmetric key (Sk) in said memory, and outputting the obtained encrypted private key (Sk[PRk]) to outside of said portable device (30), when outputting the private key in said memory to outside of said portable device.

17. The portable device according to claim 14, **characterized by** further comprising;
a means for preventing the output of said symmetric key (Sk) to outside of said portable device (30x), regardless of whether said symmetric key is encrypted or not.

18. The portable device according to claim 17, **characterized in that**:
said output preventing means has a tamperproof circuit which erases the symmetric key (Sk) in said memory when receiving an external temper attack.

19. The portable device according to claim 17, **characterized in that**;
said output preventing means comprising:
a means for judging whether an external input signal corresponds to the outputting of the symmetric key (Sk) in said memory; and
a circuit which erases the symmetric key (Sk) in said memory when the input signal is judged to be corresponding to the outputting.
